# FASCICULE DE BREVET EUROPEEN

(11) **EP 2 008 793 B1**
(45) Date de publication et mention de la délivrance du brevet: **11.08.2010**
(21) Numéro de dépôt: 08158709.9
(22) Date de dépôt: 20.06.2008
(51) Int. Cl.: B29C 49/70, B65G 47/84, B65G 47/90

(54) **Dispositif de transfert d' objets avec un bras de transfert à tête de préhension mobile sensiblement verticalement**
Objekttransfer-Vorrichtung mit einem Bewegungsarm, der über einen im wesentlichen vertikal mobilen Griffkopf verfügt
Object transfer device with a transfer arm having a substantially vertically mobile gripping head

(30) Priorité: 28.06.2007 FR 0704658
(43) Date de publication de la demande: 31.12.2008
(73) Titulaire: Sidel Participations, 76930 Octeville Sur Mer (FR)
(72) Inventeur: Legallais, Stéphane, 76930, OCTEVILLE-SUR-MER (FR)
(74) Mandataire: Cabinet Plasseraud

(56) Documents cités:
- EP-A- 0 334 483
- FR-A- 2 098 471
- FR-A- 2 867 171
- US-A- 3 778 213

## Description

La présente invention concerne un dispositif de transfert d'objets, et notamment de récipients tels que des préformes ou des bouteilles, du type comportant un support tournant qui est entraîné en rotation de manière continue autour d'un axe de rotation sensiblement vertical et qui porte au moins un bras de transfert muni d'une tête de préhension qui est apte à supporter au moins un objet.

Des dispositifs de transfert de ce type sont utilisés dans les machines de soufflage de récipients dans lesquelles le récipient est obtenu par soufflage, dans un moule de soufflage, d'une préforme chaude qui a été précédemment fabriquée par moulage par injection. De telles machines de soufflage sont notamment utilisées pour la fabrication de bouteilles en polyéthylène téréphtalate (PET).

La préforme, qui se présente couramment sous la forme d'un tube dont une extrémité est fermée et dont l'autre extrémité possède déjà la forme définitive du col du récipient, est amenée à l'intérieur du moule après avoir été chauffée à une température appropriée dans un four de conditionnement thermique. Une fois soufflé, chaque récipient est évacué du moule pour être dirigé vers la sortie de la machine.

En général, dans le cadre d'une production de récipients à cadence élevée, les machines de soufflage sont de type rotatif avec un carrousel qui tourne de manière continue autour d'un axe et qui porte, sur sa périphérie, une série de moules identiques.

Les dispositifs de convoyage à bras de transfert permettent donc, d'une part, d'introduire des préformes dans les moules et, d'autre part, de retirer les récipients formés, ceci sans avoir à arrêter le carrousel.

De tels dispositifs de transfert sont décrits et représentés par exemple dans les documents FR 2 867 171 qui décrit un tel dispositif selon le préambule de la revendication 1 et FR 2 802 191, tous deux au nom de la Demanderesse.

Par ailleurs, de manière courante dans les installations produites par la Demanderesse, les dispositifs de moulage pour le soufflage ou l'étirage-soufflage de récipients en matériau thermoplastique, tels que des préformes, comportent au moins un moule en trois parties (par exemple du type dit « à ouverture portefeuille »), à savoir deux demi-moules pour le corps du récipient et un fond de moule pour le fond du récipient, les deux demi-moules étant agencés pour être déplacés l'un par rapport à l'autre entre une position d'ouverture et une position de fermeture, les parties inférieures des deux demi-moules et la partie supérieure du fond de moule présentant des moyens mutuellement emboîtables dans la position de fermeture du moule pour leur verrouillage mutuel.

La constitution d'un moule en seulement deux demi-moules est possible lorsque le récipient à fabriquer présente un fond de forme relativement simple et est facilement extractible du moule par un dispositif de transfert tel que précédemment mentionné. C'est le cas notamment lorsque le fond du récipient ne présente pas de reliefs prononcés (fond hémisphérique ou fond plat, par exemple).

Toutefois, lorsque le fond présente une conformation complexe (fond pétaloïde ou fond bombé à convexité tournée vers l'intérieur, par exemple), la partie du fond de moule emprisonne et piège le fond du récipient formé et il ne peut pas être extrait du moule, sans toucher cette partie du fond de moule, à l'aide des dispositifs de transfert tels qu'ils sont actuellement mis en oeuvre. Autrement dit, le récipient ne peut pas être extrait, sans déformation et donc sans endommagement, d'un moule en deux parties.

Afin de remédier à ce problème, et tel que cela a été décrit dans le document FR 2 841 495 au nom de la Demanderesse, il est utilisé, pour la fabrication de récipients à fond de forme complexe, des moules en trois parties avec un fond de moule déplaçable axialement.

Toutefois, pour réaliser un fond de moule déplaçable axialement, il est nécessaire de prévoir des moyens de déplacement permettant de déplacer ce fond de moule en synchronisme avec les mouvements d'ouverture et de fermeture des deux demi-moules, ce qui est relativement complexe à mettre en oeuvre et encombrant.

Le document EP 0 334 483 A2 décrit une installation de fabrication de préformes par moulage par injection qui est équipée d'un bras rotatif dans un plan propre à saisir et à transférer une préforme moulée venant d'être extraite du moule d'injection par un bloc porte-noyau mobile verticalement. Un tel agencement ne peut pas être transposé pour réaliser un dispositif de transfert d'objets à rotation continue propre à équiper une installation de fabrication de récipients thermoplastiques équipée d'au moins un moule de soufflage ou d'étirage-soufflage du type moule portefeuille dépourvu d'un fond déplaçable axialement.

Il serait donc particulièrement intéressant de réaliser un dispositif de transfert d'objets du type récipients soufflés permettant d'extraire hors du moule les récipients soufflés sans risque d'endommagement et de détérioration, et ce quelle que soit la forme du fond de moule, tout en ne nécessitant pas la mise en oeuvre d'un fond de moule axialement déplaçable.

La présente invention propose de résoudre les problèmes ci-dessus mentionnés à l'aide d'un dispositif de transfert d'objets, notamment de récipients tels que des préformes ou des bouteilles, comportant un support tournant qui est entraîné en rotation de manière continue autour d'un axe de rotation sensiblement vertical et qui porte au moins un bras de transfert, du type dans lequel le bras de transfert est télescopique avec une partie radiale interne fixée sur le support et une partie radiale externe apte à coulisser par rapport à la partie radiale interne selon un axe d'élongation contenu dans un plan sensiblement perpendiculaire à l'axe de rotation dudit support, la partie radiale externe comprenant une tête de préhension apte à supporter au moins un objet, le dispositif de transfert étant caractérisé en ce que la tête de préhension est apte à coulisser, par rapport à la partie radiale interne, selon un axe d'élongation sensiblement parallèle à l'axe de rotation du support, ce grâce à quoi il est possible d'extraire un récipient soufflé d'un moule de soufflage par remontée verticale du récipient.

Selon un mode de réalisation avantageux, la partie radiale externe du bras de transfert comprend des moyens de liaison coulissants sur lesquels est fixée la tête de préhension.

De manière avantageuse, les moyens de liaison coulissants se présentent sous la forme d'une glissière.

Avantageusement également, la tête de préhension est reliée à un galet apte à suivre un chemin de came pour la commande du mouvement sensiblement vertical de la tête de préhension.

Avantageusement encore, une came commandant le déplacement sensiblement vertical de la tête de préhension est située à la périphérie du support tournant.

La présente invention est maintenant décrite à l'aide d'un exemple préféré de réalisation de l'invention qui est uniquement illustratif et nullement limitatif de la portée de la présente invention, en se référant au dessin annexé dans lequel :
- la figure 1 est une vue partielle en coupe schématique du dispositif de transfert selon l'invention avec la tête de préhension d'un bras de transfert ayant saisi le récipient soufflé, le moule étant dans sa position de fermeture ;
- la figure 2 est une vue partielle en coupe schématique du dispositif de transfert selon l'invention avec la tête de préhension d'un bras de transfert ayant extrait le récipient soufflé, le moule étant alors dans sa position d'ouverture, et
- la figure 3 est une vue en coupe schématique d'une glissière formant liaison entre le corps du bras de transfert et la tête de préhension.

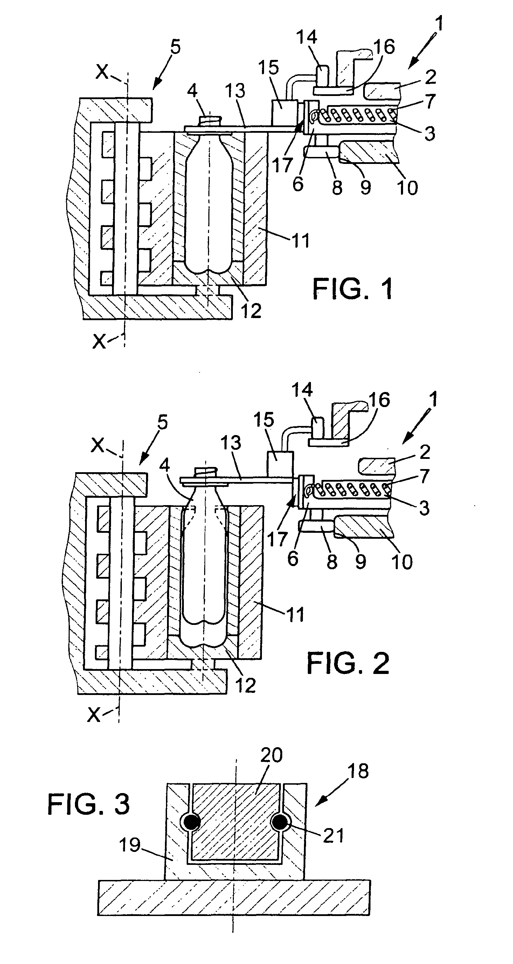

Comme représenté schématiquement sur les vues partielles en coupe schématique des figures 1 et 2, un dispositif 1 de transfert d'objets, notamment de récipients tels que des préformes ou bouteilles, selon l'invention se présente sous la forme d'un support 2 tournant (se présentant en général sous la forme d'une plaque circulaire) entraîné en rotation de manière continue autour d'un axe de rotation sensiblement vertical et sur lequel est fixé au moins un bras 3 de transfert. Il est entendu, par direction sensiblement « verticale », une direction dirigée sensiblement perpendiculairement au plan du sol.

Afin de permettre la saisie des récipients 4 soufflés dans le moule 5, il est prévu que le bras 3 de transfert présente une partie radiale interne (non représentée sur les figures, mais de tout type connu en soi) fixée sur le support 2 et une partie 6 radiale externe apte à coulisser par rapport à la partie radiale interne selon un axe d'élongation contenu dans un plan sensiblement perpendiculaire à l'axe de rotation du support 2.

Il est ainsi représenté schématiquement sur les figures 1 et 2 une partie 6 radiale externe présentant des moyens 7 formant ressort, qui sont fixés sur la partie radiale interne et sont aptes à s'étirer selon une direction sensiblement radiale. Il est connu de réaliser la commande de l'allongement radial du bras de transfert à l'aide d'un suiveur de came du type galet 8, fixé sur la partie radiale externe du bras 3 de transfert, apte à suivre un chemin 9 de came formé, par exemple, par le pourtour périphérique d'une embase 10 fixe prévue en vis-à-vis d'une des faces du support 2 et dans un plan sensiblement transversal à l'axe de rotation du support 2. Ainsi, l'élongation du bras 3 de transfert est commandée par un système à came en fonction de la position angulaire du bras autour de l'axe de rotation du support 2.

Le dispositif 1 de transfert selon l'invention est plus particulièrement, quoique non exclusivement, destiné à extraire des récipients 4 moulés dans un moule 5 comprenant deux demi-moules Il et un fond 12 de moule, le fond 12 de moule étant intégré dans les demi-moul es 11 ou pouvant s'emboîter dans les deux demi-moules 11. Dans cet exemple, les deux demi-moules 11 sont tous deux mobiles autour d'un axe de rotation X-X sensiblement vertical permettant un pivotement des deux demi-moules autour de cet axe X-X (type de moule couramment appelé « à ouverture portefeuille »).

De manière préférentielle, le fond 12 de moule est prévu mobile uniquement de manière transversale et non verticale.

La partie 6 radiale externe comprend une tête 13 de préhension, en général sous la forme d'une pince à deux branches apte à saisir le col du récipient 4.

Lors de la saisie du récipient 4 par la tête 13 de préhension, et tel que cela est illustré schématiquement sur la figure 1, la tête 13 de préhension est en position basse tandis que, lors de l'extraction du récipient 4 du moule 5 après moulage, la tête 13 de préhension est en position haute comme cela est illustré schématiquement à la figure 2.

Afin de commander le passage de la tête 13 de préhension de sa position basse à sa position haute, il est prévu un organe suiveur de came de type galet 14 qui est fixé par des moyens 15 de fixation, de tout type connu en soi, sur la tête 13 de préhension.

L'organe 14 suiveur de came est apte à coopérer avec une came 16 pour la commande du mouvement sensiblement vertical de la tête 13 de préhension, la came 16 étant préférentiellement située à la périphérie du support 2 tournant.

De plus, la partie 6 radiale externe du bras 3 de transfert comprend des moyens 17 de liaison coulissants sur lesquels est fixée la tête 13 de préhension.

Les moyens 17 de liaison coulissants se présentent, selon un mode de réalisation préférentiel, sous la forme d'une glissière 18. Comme par exemple représenté sur la vue en coupe transversale de la figure 3, il peut s'agir d'une glissière à roulement à billes de type connu en soi, comportant un premier profilé 19 fixe de support et un second profilé 20 apte à coulisser par rapport au premier profilé 19 par l'intermédiaire de billes 21 interposées entre les deux profilés, la tête 13 de préhension étant fixée sur le second profilé 20.

Il est néanmoins possible d'envisager toute autre forme possible de glissière et pas uniquement le mode de réalisation de la glissière tel qu'il est illustré sur la figure 3.

Ainsi, grâce à la tête 13 de préhension selon l'invention, il est possible d'extraire par le haut des récipients moulés sans nécessité de prévoir un fond de moule verticalement amovible vers le bas, comme cela est couramment le cas selon l'art antérieur.

## Revendications

1. Dispositif de transfert d'objets, notamment de récipients tels que des préformes ou des bouteilles, comportant un support (2) tournant qui est entraîné en rotation de manière continue autour d'un axe de rotation sensiblement vertical et qui porte au moins un bras (3) de transfert, du type dans lequel le bras (3) de transfert est télescopique avec une partie radiale interne fixée sur le support (2) et une partie (6) radiale externe apte à coulisser par rapport à ladite partie radiale interne selon un axe d'élongation contenu dans un plan sensiblement perpendiculaire à l'axe de rotation dudit support (2), la partie (6) radiale externe comprenant une tête (13) de préhension apte à supporter au moins un objet,
le dispositif étant **caractérisé en ce que** la tête (13) de préhension est apte à coulisser, par rapport à la partie radiale interne, selon un axe d'élongation sensiblement parallèle à l'axe de rotation du support (2), ce grâce à quoi il est possible d'extraire un récipient (4) soufflé d'un moule (5) de soufflage par remontée verticale du récipient (4).

2. Dispositif selon la revendication précédente, **caractérisé en ce que** la partie (6) radiale externe du bras (3) de transfert comprend des moyens (16) de liaison coulissants sur lesquels est fixée ladite tête (13) de préhension.

3. Dispositif selon la revendication précédente, **caractérisé en ce que** les moyens (16) de liaison coulissants se présentent sous la forme d'une glissière (18).

4. Dispositif selon l'une quelconque des revendications précédentes, **caractérisé en ce que** ladite tête (13) de préhension est reliée à un galet (14) apte à suivre un chemin de came (16) pour la commande du mouvement sensiblement vertical de ladite tête (13) de préhension.

5. Dispositif selon l'une quelconque des revendications précédentes, **caractérisé en ce qu'**une came (16) commandant le déplacement sensiblement vertical de la tête (13) de préhension est située à la périphérie dudit support (2) tournant.

## Claims

1. A device for transferring objects, in particular containers such as preforms or bottles, comprising a rotating support (2) which is rotated continuously about a substantially vertical rotational axis and which supports at least one transfer arm (3), of the type in which the transfer arm (3) is telescopic with an inner radial part fixed to the support (2) and an outer radial part (6) adapted for sliding with respect to said inner radial part along an elongation axis held within a plane substantially perpendicular to the rotational axis of said support (2), the outer radial part (6) having a gripper head (13) adapted for supporting at least one object,
**characterized in that** the gripper head (13) is adapted for sliding, with respect to the inner radial part, along an elongation axis substantially parallel to the rotational axis of the support (2), whereby a blow-molded container (4) can be extracted from a blow mold (5) by lifting the container (4) vertically.

2. The device according to the previous claim, **characterized in that** the outer radial part (6) of the transfer arm (3) has sliding connection means (16) on which said gripper head (13) is fixed.

3. The device according to the previous claim, **characterized in that** the sliding connection means (16) are in the form of a slideway (18).

4. The device as claimed in any one of the previous claims, **characterized in that** said gripper head (13) is linked to a roller (14) adapted for following a cam way (16) in order to control the substantially vertical movement of said gripper head (13).

5. The device as claimed in any one of the previous claims, **characterized in that** a cam (16) controlling the substantially vertical displacement of the gripper head (13) is located at the periphery of said rotating support (2).

## Patentansprüche

1. Vorrichtung zum Transfer von Objekten, insbesondere von Vorform-Behältern oder Flaschen-Behältern, umfassend: ein Drehgestell (2), das zu einer kontinuierlichen Drehung um eine im Wesentlichen vertikale Drehachse angetrieben wird, und das zumindest einen Transferarm (3) trägt, wobei der Transferarm (3) teleskopartig ist, bei dem ein radial inneres Teil am Gestell (2) fixiert ist und ein radial äußeres Teil (6) im Verhältnis zum radial inneren Teil entlang einer Längsachse, die in einer zur Drehachse des Gestells (2) im Wesentlichen senkrechten Ebene liegt, gleiten kann, wobei das radial äußere Teil (6) einen Greifkopf (13) umfasst, der zumindest ein Objekt halten kann,
wobei die Vorrichtung **dadurch gekennzeichnet ist, dass** der Greifkopf (13) im Verhältnis zum radial inneren Teil entlang einer zur Drehachse des Gestells (2) im Wesentlichen parallelen Längsachse gleiten kann, wodurch es möglich ist, einen in einer Blasform (5) ausgeblasenen Behälter (4) durch vertikales Hochheben des Behälters (4) herauszunehmen.

2. Vorrichtung gemäß des vorangegangenen Anspruchs, **dadurch gekennzeichnet, dass** der radial äußere Teil (6) des Transferarms (3) ein Gleitschnittstellenmittel (16) umfasst, an dem der Greifkopf (13) fixiert ist.

3. Vorrichtung gemäß des vorangegangenen Anspruchs, **dadurch gekennzeichnet, dass** Gleitschnittstellenmittel (16) in der Gestalt eines Schiebers (18) vorliegt.

4. Vorrichtung gemäß einem der vorangegangenen Ansprüche, **dadurch gekennzeichnet, dass** der Greifkopf (13) an einer Rolle (14) angebunden ist, die zur im Wesentlichen vertikalen Bewegungssteuerung des Greifkopfs (13) einem Nockenweg (16) folgen kann.

5. Vorrichtung gemäß einem der vorangegangenen Ansprüche, **dadurch gekennzeichnet, dass** eine die Auslenkung des Greifkopfs (13) im Wesentlichen vertikal steuernde Nocke (16) am Umfang des Drehgestells (2) gelegen ist.
